# EUROPÄISCHE PATENTSCHRIFT

(11) **EP 0 926 756 B1**
(45) Veröffentlichungstag und Bekanntmachung des Hinweises auf die Patenterteilung: **21.11.2001**
(21) Anmeldenummer: 98123344.8
(22) Anmeldetag: 08.12.1998
(51) Int. Cl.: H01M 8/04, H01M 8/06

(54) **PEM-Brennstoffzellensystem sowie Verfahren zum Betreiben eines PEM-Brennstoffzellensystems**
PEM fuel cell system as well as its method of operation
Système de piles à combustible de type PEM ainsi que méthode pour son opération

(30) Priorität: 11.12.1997 DE 19755116
(43) Veröffentlichungstag der Anmeldung: 30.06.1999
(73) Patentinhaber: XCELLSIS GmbH, 73230 Kirchheim / Teck-Nabern (DE)
(72) Erfinder: Hornburg, Gerald, 89275 Elchingen (DE)
(74) Vertreter: Kocher, Klaus-Peter

(56) Entgegenhaltungen:
- EP-A- 0 729 196
- US-A- 4 128 700
- US-A- 5 360 679
- AMPHIETT J C ET AL: "SYSTEM ANALYSIS OF AN INTEGRATED METHANOL STEAM REFORMER/PEM FUEL CELL POWER GENERATING SYSTEM" PROCEEDINGS OF THE 27TH INTERSOCIETY ENERGY CONVERSION ENGINEERING CONFERENCE, AUGUST 3 - 7, 1992, Bd. 3, Nr. CONF. 27, 3. August 1992, Seiten 3.343-3.348, XP000406781 INSTITUTE OF ELECTRICAL AND ELECTRONICS ENGINEERS
- PATENT ABSTRACTS OF JAPAN vol. 016, no. 420 (E-1259), 4. September 1992 -& JP 04 144066 A (OSAKA GAS CO LTD), 18. Mai 1992
- PATENT ABSTRACTS OF JAPAN vol. 097, no. 004, 30. April 1997 -& JP 08 338260 A (TOKYO GAS CO LTD;MITSUBISHI HEAVY IND LTD), 24. Dezember 1996
- PATENT ABSTRACTS OF JAPAN vol. 017, no. 501 (E-1429), 9. September 1993 -& JP 05 129029 A (MITSUBISHI HEAVY IND LTD), 25. Mai 1993
- PATENT ABSTRACTS OF JAPAN vol. 097, no. 001, 31. Januar 1997 -& JP 08 241724 A (ISHIKAWAJIMA HARIMA HEAVY IND CO LTD), 17. September 1996
- PATENT ABSTRACTS OF JAPAN vol. 009, no. 147 (E-323), 21. Juni 1985 -& JP 60 028173 A (HITACHI SEISAKUSHO KK), 13. Februar 1985

## Beschreibung

Die Erfindung betrifft ein Verfahren zum Betreiben eines PEM-Brennstoffzellensystems nach dem Oberbegriff des Anspruchs 1, sowie ein PEM-Brennstoffzellensystem nach dem Oberbegriff des Anspruchs 5. Eine PEM-Brennstoffzelle umfaßt als wesentliche Komponente eine protonenleitende Elektrolytmembran (Proton Exchange Membran).

In der **EP 0 629 013 B1** sowie der **DE 43 18 818 A1** ist jeweils ein Brennstoffzellensystem bekannt, bei dem die Brennstoffzelle über ein Kompressor mit Prozeßluft versorgt wird. Der Kompressor wird mittels eines Elektromotors angetrieben. Zur Rückgewinnung der in der Abluft der Brennstoffzelle enthaltenen Energie ist der Kompressor außerdem mit einem Expander gekoppelt. Dazu sind Kompressor und Expander auf derselben Welle angeordnet. Ähnlich aufgebaut ist das Brennstoffzellensystem nach der **DE 40 21 097 A1,** bei der die Abluft der Brennstoffzelle an eine Entspannungsturbine geleitet wird. Die Entspannungsturbine ist mit einem Frischluftverdichter für die Luftversorgung der Brennstoffzelle gekoppelt.

Als Wärmequelle ist in den bekannten Brennstoffzellensystemen außerdem ein katalytischer Brenner vorhanden, dem Brennstoff in Form von feuchtem Anodenabgas (H₂ und CO₂) und zusätzlich auch Methanol zugeführt wird.

Bei der Verdichtung der Prozeßluft auf den üblichen Arbeitsdruck von z.B. 3 bar wird ein Anteil von ca. 20% der erzeugten Leistung der Brennstoffzelle für die Kompression benötigt. Bei der Nutzung der Energierückgewinnung im Expander reduziert sich dieser Anteil auf ca. 10 bis 15%. Damit trägt die Luftversorgung der Brennstoffzelle immer noch erheblich zur Wirkungsgradminderung des Systems bei.

Gleichzeitig besteht aus Gründen der Kostensenkung und Volumensenkung ein Bedarf an höheren Arbeitsdrücken auf der Kathodenseite (Luft), um die Brennstoffzelle aufgrund engerer Gaskanäle kleiner bauen zu können und eine höhere flächenbezogene Leistungsausbeute in der Brennstoffzelle zu erzielen.

Aus der **DE 44 46 841 A1** ist ein Verfahren zum Betreiben eines Brennstoffzellensystems bekannt, bei dem sowohl das Anodenabgas wie auch die Abluft der Brennstoffzelle in den katalytischen Brenner geleitet werden.

Aus der **DE 40 32 993 C1** ist eine Anlage zur kombinierten Erzeugung elektrischer und mechanischer Energie offenbart. Dabei werden die in einem Brenner unter Zuführung eines sauerstoffhaltigen und eines wasserstoffhaltigen Gases erzeugten Verbrennungsgase zur Gewinnung mechanischer Energie in einer nachgeschalteten Gasturbine genutzt. Die erzeugte mechanische Energie wird zu einem Teil für den Antrieb eines Kompressors verwendet, mit dem das dem Brenner zuzuführende sauerstoffhaltige Gas verdichtet wird. Die Anlage umfaßt zur Erzeugung elektrischer Energie außerdem eine Brennstoffzelle, deren wasserstoffhaltiges Anodenabgas in den Brenner geleitet wird.

Aufgabe der Erfindung ist es, ein PEM-Brennstoffzellensystem bzw. ein Verfahren zum Betreiben eines PEM-Brennstoffzellensystems zu schaffen, mit dem ein höherer Wirkungsgrad erreicht werden kann.

Diese Aufgabe wird durch den Gegenstand des Anspruchs 1 bzw. des Anspruchs 5 gelöst. Vorteilhafte Ausführungen der Erfindung sind Gegenstand von Unteransprüchen.

Grundlegend für die Erfindung ist die Erkenntnis, daß die Expanderleistung deutlich gesteigert werden kann, wenn dem Expander mehr Luftmassenstrom, eine höhere Temperatur und ggf. ein höherer Druck zugeführt wird. Eine Erhöhung des Luftmassenstroms und der Temperatur wird erfindungsgemäß erreicht, indem die Luft am Kathodenausgang der PEM-Brennstoffzelle vor der Expansion zunächst als Luftversorgung dem katalytischen Brenner zugeführt wird, und der Expander mit der Abluft des katalytischen Brenners betrieben wird. Das Kathodenabgas ist durch die Brennstoffzellenreaktion zwar an Sauerstoff abgereichert, enthält aber immer noch ausreichende Mengen an Sauerstoff für die Reaktion im katalytischen Brenner. Durch diese Anordnung wird der an den Expander geführte Massenstrom verglichen mit den bekannten Vorrichtungen erhöht, da dem katalytischen Brenner Brennstoff, üblicherweise feuchtes Anodenabgas und Methanol, zugeführt wird, dessen Reaktionsprodukte somit ebenfalls zu dem Expander gelangen. Gleichzeitig wird der gesamte, dem Expander zuzuführende Luftmassenstrom von Brennstoffzellentemperatur (typische Temperatur bei PEM-Brennstoffzellen ca. 80°C) auf die Arbeitstemperatur des katalytischen Brenners (ca. 350°C) erhöht. Mit dem derart erwärmten Massenstrom kann nun direkt ein geeigneter, für diese Temperaturen ausgelegter Expander betrieben werden. In einer vorteilhaften Ausführung kann die ser Massenstrom teilweise auch zur Vorwärmung des Kathodenabgases vor Eintritt in den katalytischen Brenner genutzt werden.

Durch den zusätzlichen Energieeintrag in den Expander in Form von Wärme und Massenstrom wird dessen Leistung soweit erhöht, daß der Kompressorantrieb (Elektromotor und Umrichter) deutlich kleiner ausfallen kann und bei optimaler Abstimmung von Druckniveau und/oder zusätzlicher Brenngaszufuhr im katalytischen Brenner auch ganz wegfallen kann.

Bei PEM-Brennstoffzellensystemen, bei der das Brenngas für die Brennstoffzellen durch ein Hochdruckgaserzeugungssystem (z.B. bei der Methanolreformierung) erzeugt wird, eröffnet sich eine weitere Möglichkeit zur Steigerung der Expanderleistung bzw. Senkung der Kompressorleistung, indem mittels einer zweiten Verdichterstufe vor dem Kathodeneingang der PEM-Brennstoffzelle das Druckniveau erhöht wird. Die zweite Verdichterstufe wird durch Expansion des in dem Hochdruckgaserzeugungssystems vorhandenen Gases betrieben, wobei der Gasdruck vom Systemdruck des Hochdruckgaserzeugungssystems (> 15 bar, insbesondere zwischen 20 und 30 bar) auf Arbeitsdruck des katalytischen Brenners (ca. 3 bar) fällt. Das expandierte Gas wird nach Durchlaufen der zweiten Verdichterstufe dem katalytischen Brenner zugeführt und erhöht somit den dem Expander der ersten Verdichterstufe zugeführten Massenstrom. Die zweite Verdichterstufe kann in Form eines mit einem Expander gekoppelten Kompressor ohne Motor oder eines Turboladers ausgebildet sein.

Durch diese Ausführung wird nicht nur die elektrische Kompressorleistung reduziert (Systemwirkungsgraderhöhung und geringere Baugröße), sondern auch der Wirkungsgrad und die Baugröße der Brennstoffzelle positiv beeinflußt.

Die Erfindung wird anhand von Fig. näher erläutert. Es zeigen:
- Fig. 1 und 2: bekannte Brennstoffzellensystem 2, wie in der Beschreibungseinleitung erläutert,
- Fig. 3: eine Ausführung eines erfindungsgemäßen Brennstoffzellensystems.

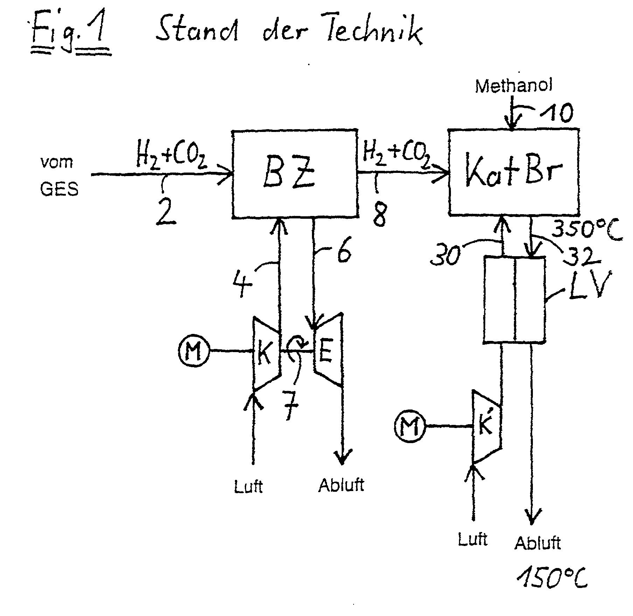

Fig. 1 zeigt ein bekanntes Brennstoffzellensystem, wie in der Beschreibungseinleitung erwähnt. Es umfaßt die PEM-Brennstoffzelle **BZ** mit der Zuführleitung **2** für das Brenngas, z.B. einem Gemisch aus H₂ und CO₂, welches in einem separaten Gaserzeugungsystem **G E S** erzeugt wird, sowie die Zu- und Abfuhrleitungen **4,6** für die Prozeßluft. Die Prozeßiuft wird vor Eintritt in die Brennstoffzelle **BZ** mittels eines Kompressors **K,** der von einem Motor **M** angetrieben wird, komprimiert. Zur Rückgewinnung der in der Abluft der Brennstoffzelle **BZ** enthaltenen Energie ist in der Abluftleitung **6** ein Expander **E** angeordnet, welcher mit dem Kompressor **K** gekoppelt ist. Expander **E** und Kompressor **K** sitzen auf derselben Welle **7**.

Desweiteren ist ein katalytischer Brenner **KatBr** vorhanden, der als Wärmequelle für das System dient. Als Brennstoff wird ihm über die Leitung **8** das feuchte Anodenabgas aus der Brennstoffzelle **BZ,** z.B H₂ und CO₂ und über die Leitung **1 0** Methanol zugeführt. Der für die Reaktion im Brenner **KatBr** außerdem benötigte Sauerstoff wird über die Luftzufuhrleitung **3 0** nach Kompression im Kompressor **K**' zugeführt. Die Abluft des Brenners **KatBr** in der Leitung **3 2 weist** eine Temperatur von 350°C auf und wird zur Vorwärmung der dem Brenner zuzuführenden Luft verwendet (Luftvorwärmer **LV**). Beim Verlassen des Luftvorwärmers **LV** weist die Abluft noch eine Temperatur von ca. 150°C auf. Diese Wärme kann bisher im System nicht weiter genutzt werden.

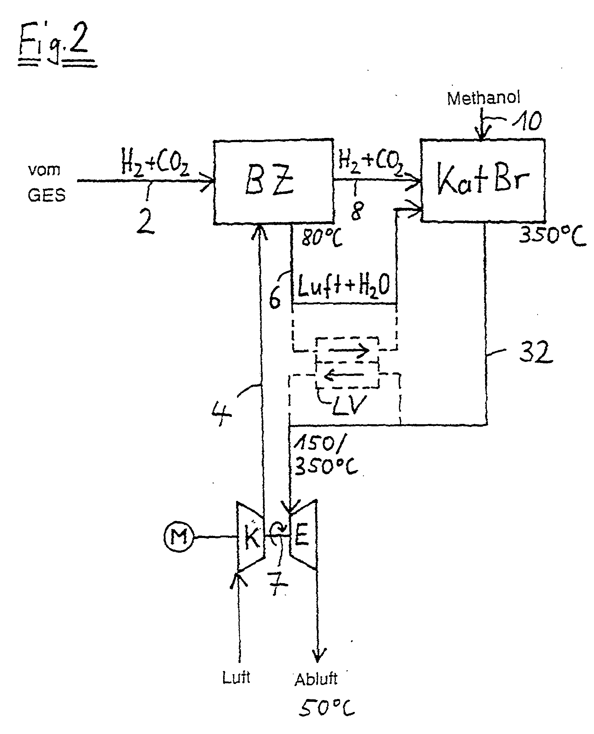

Fig. 2 zeigt ein weiteres bekanntes System. Das Brenngas für die PEM-Brennstoffzelle wird in dieser Ausführung mittels eines Niederdruckgaserzeugungssystems **G ES,** z. B. durch CO-Oxidation, erzeugt und über die Leitung **2** in die Brennstoffzelle **BZ** geführt. Anders als bei dem System nach Fig. 1 wird die Abluft am Kathodenausgang der Brennstoffzelle **BZ** nicht sofort expandiert, sondern über die Leitung **6** dem katalytischen Brenner **KatBr** zugeführt, wo sie als Luftversorgung dient. Die Abluft des katalytischen Brenners **KatBr** wird über die Leitung **32** an dem mit dem Kompressor **K** gekoppeften Expander **E** geführt. Kompressor **K** und Expander **E** sitzen auf derselben Welle **7.** Optional kann ein Teil der Abiuft des Brenners **KatBr** zur Luftvorwärmung des dem Brenner zuzuführenden Luftstroms verwendet werden. Der entsprechende Luftvorwärmer **LV** ist gestrichelt eingezeichnet. Die Abluft der Brennstoffzelle **BZ,** die am Kathodenausgang der Brennstoffzelle eine Temperatur von ca. 80°C aufweist, wird im Brenner **KatBr** auf ca. 350°C erwärmt. Die Abluft des Brenners **KatBr** weist beim Eintritt in den Expander **E,** abhängig von der Luftvorwärmung im Luftvorwärmer **LV,** eine Temperatur zwischen 150 und 350 °C auf. Nach dem Verlassen des Expanders E beträgt die Temperatur etwa 50°C. Die Abluft des Brenners **KatBr** verläßt das System somit bei einer wesentlich geringeren Temperatur als bei den bekannten Systemen. Gleichzeitig wird dem Expander ein größerer Massenstrom zugeführt, der zudem eine höhere Temperatur aufweist. Es ergibt sich somit ein wesentlich erhöhter Gesamtwirkungsgrad des Systems.

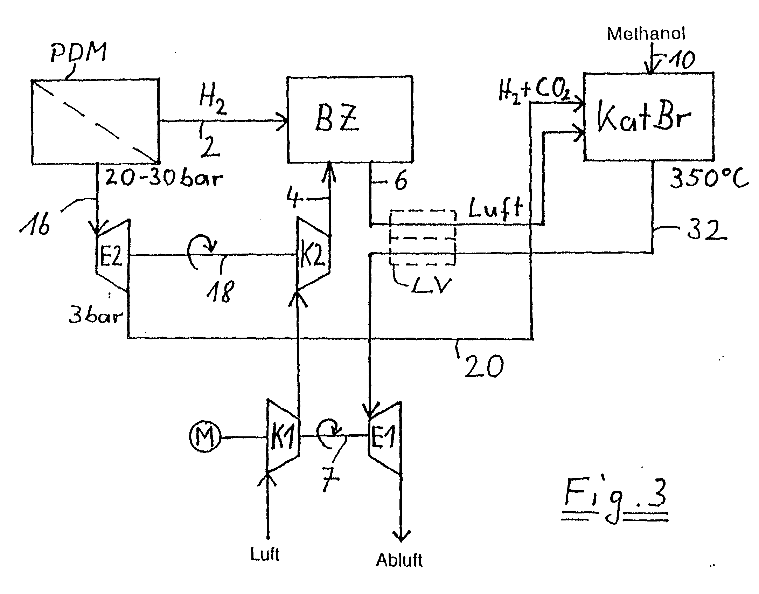

Fig. 3 zeigt eine Ausführung des erfindungsgemäßen PEM-Brennstoffzellensystems. Bei diesem System wird das Brenngas für die PEM-Brennstoffzelle **BZ** durch eine Methanolreformierungsreaktion unter Einsatz eines Hochdruckgaserzeugungssystems erzeugt. Dieses umfaßt z.B. eine Pd-Membran-Einheit **PDM.** Das Brenngas (H₂) wird über die Leitung **2** in die Brennstoffzelle **BZ** geführt. Die der Brennstoffzelle **BZ** zuzuführende Prozeßluft wird wie bei den bisher beschriebenen Ausführungen mittels eines Kompressors **K1** komprimiert. Entsprechend Fig. 2 wird auch hier die Abluft der PEM-Brennstoffzelle **BZ** über eine Leitung **6** an den katalytischen Brenner **KatBr** für dessen Luftversorgung geführt, und das Abgas des Brenners, ggf. mit Luftvorwärmung (Luftvorwärmer **LV** gestrichelt gezeichnet), über die Leitung **32** an den mit dem Kompressor **K1** gekoppelten Expander **E1** geführt, die auf derselben Welle **7** sitzen. Zur weiteren Steigerung des Expanderleistung bzw. Senkung der Kompressorleistung ist in dieser Ausführung eine zweite Verdichterstufe vorhanden, die hier aus dem Kompressor **K2** und einem damit gekoppelten Expander **E2** besteht. Kompressor **K2** und Expander **E2** sind auf einer gemeinsamen Welle **18** angeordnet. Über die Leitung **16** wird das Gas aus der Pd-Membran-Einheit **P D M** des Hochdruckerzeugungssystems, inwelcher ein Druck höher 15 bar, bevorzugt zwischen 20 und 30 bar, vorliegt, auf den Systemdruck des katalytischen Brenners (ca. 3 bar) **KatBr** expandiert. Das expandierte Gas wird anschließend über die Leitung **20** an den katalytische Brenner **KatBr** geführt, wo es als Brennstoff für die Brennerreaktion dient. Da der Expander **E2** der zweiten Verdichterstufe von der Expansion des Gases im Gaserzeugungssystem betrieben wird, wird für ihn kein zusätzlichen Antrieb benötigt. Mit der beschriebenen Ausführung wird nicht nur eine Erhöhung des Systemwirkungsgrads erreicht, sondern darüberhinaus der Wirkungsgrad und die Baugröße der Brennstoffzelle positiv verändert.

## Patentansprüche

1. Verfahren zum Betreiben eines PEM-Brennstoffzellensystems, enthaltend
- eine PEM-Brennstoffzelle (BZ),
- einen Kompressor (K, K1) zur Komprimierung der der Brennstoffzelle (BZ) zuzuführenden Prozeßluft,
- einen mit dem Kompressor (K,K1) gekoppelten Expander (E,E1) zum Antrieb des Kompressors (K,K1),
- einen katalytischen Brenner (KatBr) als Wärmequelle,
wobei das Kathodenabgas der PEM-Brennstoffzelle (BZ) dem katalytischen Brenner (KatBr) zur Luftversorgung zugeführt wird und der Expander (E,E1) mit der Abluft des katalytischen Brenners (KatBr) betrieben wird, **dadurch gekennzeichnet, daß** das PEM-Brennstoffzellensystem ein Hochdruckgaserzeugungssystem (PDM) zur Erzeugung des Brenngases für die PEM-Brennstoffzelle (BZ) sowie einen zweiten Kompressor (K2), der eine zweite Stufe zur Komprimierung der Prozeßluft bildet, umfaßt, wobei der zweite Kompressor (K2) mit einem zweiten Expander (E2) gekoppelt ist, und der zweite Expander (E2) durch Expansion des unter einem Druck von höher als 15 bar stehenden Gases aus dem Hochdruckgaserzeugungssystem (PDM) betrieben wird.

2. Verfahren nach Anspruch 1, **dadurch gekennzeichnet, daß** das Gas im Hochdruckgaserzeugungssystem (PDM) unter einem Druck zwischen 20 bis 30 bar steht.

3. Verfahren nach Anspruch 1 oder 2, **dadurch gekennzeichnet, daß** das den zweiten Expander (E2) betreibende Gas nach Durchlaufen des zweiten Expanders (E2) dem katalytischen Brenner (KatBr) zur Luftversorgung zugeführt wird.

4. Verfahren nach einem der vorangehenden Ansprüche, **dadurch gekennzeichnet, daß** die Abluft des katalytischen Brenners (KatBr) zur Vorwärmung des Kathodenabgases der Brennstoffzelle (BZ) vor seinem Eintritt in den katalytischen Brenner (KatBr) eingesetzt wird.

5. PEM-Brennstoffzellensystem, enthaltend
- eine PEM-Brennstoffzelle (BZ),
- einen Kompressor (K, K1) zur Komprimierung der der Brennstoffzelle (BZ) zuzuführenden Prozeßluft,
- einen mit dem Kompressor (K,K1) gekoppelten Expander (E,E1) zum Antrieb des Kompressors (K,K1),
- einen katalytischen Brenner (KatBr) als Wärmequelle,
wobei eine Leitung (6) vorhanden ist, mittels der das Kathodenabgas der PEM-Brennstoffzelle (BZ) dem katalytischen Brenner (KatBr) zur Luftversorgung zugeführt werden kann und eine weitere Leitung (32) vorhanden ist, mittels der die Abluft des katalytischen Brenners (KatBr) an den Expander (E,E1) geführt werden kann,
**dadurch gekennzeichnet, daß** es ein Hochdruckgaserzeugungssystem (PDM) zur Erzeugung des Brenngases für die PEM-Brennstoffzelle (BZ) sowie einen zweiten Kompressor (K2), der eine zweite Stufe zur Komprimierung der Prozeßluft bildet, umfaßt, wobei der zweite Kompressor (K2) mit einem zweiten Expander (E2) gekoppelt ist, und der zweite Expander (E2) über eine Leitung (16) mit dem Hochdruckgaserzeugungssystem (PDM) in Verbindung steht, so daß das aus dem Hochdruckgaserzeugungssystem (PDM) stammende, unter einem Druck von höher als 15 bar stehende Gas an den zweiten Expander (E2) geführt werden kann.

## Claims

1. Method of operating a PEM fuel cell system comprising
- a PEM fuel cell (BZ),
- a compressor (K, K1) for compressing the process air to be delivered to the fuel cell (BZ),
- an expander (E, E1) coupled with the compressor (K, K1) for driving the compressor (K, K1),
- a catalytic burner (KatBr) as a heat source,
the cathode exhaust gas of the PEM fuel cell (BZ) being delivered to the catalytic burner (KatBr) as an air supply and the expander (E, E1) being operated by the exhaust air from the catalytic burner (KatBr),
**characterised in that** the PEM fuel cell system has a high-pressure gas generating system (PDM) for producing the combustion gas for the PEM fuel cell (BZ) and a second compressor (K2) forming a second stage for compressing the process air, the second compressor (K2) being coupled with a second expander (E2) and the second expander (E2) being operated due to expansion of the gas from the high-pressure gas generating system (PDM) which is at a pressure of more than 15 bar.

2. Method as claimed in claim 1, **characterised in that** the gas in the high-pressure gas generating system (PDM) is at a pressure of between 20 and 30 bar.

3. Method as claimed in claim 1 or 2, **characterised in that** after passing through the second expander (E2), the gas operating the second expander (E2) is delivered to the catalytic burner (KatBr) as an air supply.

4. Method as claimed in one of the preceding claims, **characterised in that** the exhaust air from the catalytic burner (KatBr) is used to pre-heat the cathode exhaust gas from the fuel cell (BZ) before it enters the catalytic burner (KatBr).

5. PEM fuel cell system comprising
- a PEM fuel cell (BZ),
- a compressor (K, K1) for compressing the process air to be delivered to the fuel cell (BZ),
- an expander (E, E1) coupled with the compressor (K, K1) for driving the compressor (K, K1),
- a catalytic burner (KatBr) as a heat source,
a line (6) being provided, by means of which the cathode exhaust gas from the PEM fuel cell (BZ) can be delivered to the catalytic burner (KatBr) as an air supply and another line (32) being provided, by means of which the exhaust air from the catalytic burner (KatBr) can be delivered to the expander (E, E1),
**characterised in that** it comprises a high-pressure gas generating system (PDM) for generating the combustion gas for the PEM fuel cell (BZ) and a second compressor (K2) forming a second stage for compressing the process air, the second compressor (K2) being coupled with a second expander (E2), and the second expander (E2) being connected via a line (16) to the high-pressure gas generating system (PDM) so that the gas originating from the high-pressure gas generating system (PDM) at a pressure of more than 15 bar can be delivered to the second expander (E2).

## Revendications

1. Procédé pour faire fonctionner un système de cellule à combustible à membrane échangeuse de protons (MEP), qui comprend :
- une cellule à combustible (BZ) à MEP,
- un compresseur (K, K1) pour comprimer l'air de réaction à fournir à la cellule à combustible (BZ)
- un dispositif à expansion (E, E1) accouplé au compresseur (K, Kl) pour l'entraînement du compresseur (K, K1),
- un brûleur catalytique (KatBr) à titre de source de chaleur,
dans lequel les gaz d'échappement de cathode de la cellule à combustible à MEP sont amenés au brûleur catalytique pour l'alimentation en air, et le dispositif à expansion (E, E1) est entraîné avec les gaz d'échappement du brûleur catalytique (KatBr),
**caractérisé en ce que** le système de cellule à combustible à MEP comprend un système de production de gaz à haute pression (PDM) pour produire le gaz combustible pour la cellule à combustible (BZ) à MEP ainsi qu'un deuxième compresseur (K2) qui constitue un deuxième étage pour la compression de l'air de réaction, ce deuxième compresseur (K2) étant accouplé à un deuxième dispositif à expansion (E2), et le deuxième dispositif à expansion (E2) est entraîné par expansion du gaz provenant du système de production de gaz à haute pression (PDM), se trouvant sous une pression supérieure à 15 bars.

2. Procédé selon la revendication 1, **caractérisé en ce que** le gaz dans le système de production de gaz à haute pression (PDM) se trouve sous une pression entre 20 et 30 bars.

3. Procédé selon l'une ou l'autre des revendications 1 et 2, **caractérisé en ce que** le gaz qui entraîne le deuxième dispositif à expansion (E2) est amené au brûleur catalytique (KatBr) pour l'alimentation en air, après avoir traversé le deuxième dispositif à expansion (E2).

4. Procédé selon l'une des revendications précédentes, **caractérisé en ce que** le gaz d'échappement du brûleur catalytique (KatBr) est utilisé avant son entrée dans le brûleur catalytique (KatBr) pour le préchauffage des gaz d'échappement de cathode de la cellule à combustible (BZ).

5. Système de cellule à combustible à membrane échangeuse de protons (MEP), comprenant :
- une cellule à combustible (BZ) à MEP,
- un compresseur (K, K1) pour comprimer l'air de réaction à fournir à la cellule à combustible (BZ),
- un dispositif à expansion (E, E1) accouplé au compresseur (K, K1) pour l'entraînement du compresseur (K, K1),
- un brûleur catalytique (KatBr) à titre de source de chaleur,
dans lequel est prévue une conduite (6) au moyen de laquelle les gaz d'échappement de cathode de la cellule à combustible (BZ) à MEP sont amenés au brûleur catalytique (KatBr) pour l'alimentation en air, et il est prévu une autre conduite (32) au moyen de laquelle l'air d'échappement du brûleur catalytique (KatBr) peut être amené au dispositif à expansion (E, E1),
**caractérisé en ce qu'**il comprend un système de production de gaz à haute pression (PDM) pour produire le gaz de combustion pour la cellule à combustible (BZ) à MEP, ainsi qu'un deuxième compresseur (K2), qui constitue un deuxième étage pour la compression de l'air de réaction, ce deuxième compresseur (K2) étant accouplé à un deuxième dispositif à expansion (E2), et le deuxième dispositif à expansion (E2) est relié via une conduite (16) au système de production de gaz à haute pression (PDM), de sorte que le gaz provenant du système de production de gaz à haute pression (PDM) et se trouvant sous une pression supérieure à 15 bars, peut être amené au deuxième dispositif à expansion (E2).
